# FASCICULE DE BREVET EUROPEEN

(11) **EP 1 802 076 B1**
(45) Date de publication et mention de la délivrance du brevet: **11.02.2015**
(21) Numéro de dépôt: 06126660.7
(22) Date de dépôt: 20.12.2006
(51) Int. Cl.: H04L 29/06

(54) **Noeud de réseau de transport à adjonction de données temporelles à des données d'ingénierie de trafic**
Knoten in einem Transportnetz, das zeitabhängige Daten zu Netzverkehrstechnikdaten hinzufügt
Node in a transport network that adds time dependent data to traffic engineering data

(30) Priorité: 23.12.2005 FR 0554067
(43) Date de publication de la demande: 27.06.2007
(73) Titulaire: ALCATEL LUCENT, 92100 Boulogne-Billancourt (FR)
(72) Inventeur: Pichot, Antoine, 02330, Baulne en Brie (FR)
(74) Mandataire: Sciaux, Edmond

(56) Documents cités:
- WO-A-02/056564
- US-A1- 2002 131 362
- GUERIN R A ET AL: "NETWORKS WITH ADVANCE RESERVATIONS: THE ROUTING PERSPECTIVE" PROCEEDINGS IEEE INFOCOM 2000. THE CONFERENCE ON COMPUTER COMMUNICATIONS. 19TH. ANNUAL JOINT CONFERENCE OF THE IEEE COMPUTER ANDCOMMUNICATIONS SOCIETIES. TEL AVIV, ISRAEL, MARCH, 26-30, 2000, PROCEEDINGS IEEE INFOCOM. THE CONFERENCE ON COMPUTER COMMU, vol. VOL. 3 OF 3. CONF. 19, 26 mars 2000 (2000-03-26), pages 118-127, XP001004240 ISBN: 0-7803-5881-3
- SURI S ET AL: "Profile-based routing and traffic engineering" COMPUTER COMMUNICATIONS, ELSEVIER SCIENCE PUBLISHERS BV, AMSTERDAM, NL, vol. 26, no. 4, 1 mars 2003 (2003-03-01), pages 351-365, XP004406394 ISSN: 0140-3664

## Description

L'invention concerne les réseaux de transport comportant un plan de contrôle exploitant un protocole de routage, et plus particulièrement la réservation de ressources et/ou le calcul de routes (ou chemins de connexion) au sein de tels réseaux.

On entend ici par « protocole de routage » aussi bien les protocoles de routage dits « à états de lien », comme par exemple OSPF (« Open Shortest Path First Protocol »), OSPF-TE (« OSPF - Traffic Engineering ») et IS-IS (« Intermediate System - Intermediate System ») que les protocoles de routage dits « à vecteurs de distance », comme par exemple BGP (« Border Gateway Protocol ») et RIP (« Routing Information Protocol »).

Par ailleurs, on entend ici par « réseau de transport comportant un plan de contrôle exploitant un protocole de routage », un réseau de transport à plan de contrôle par exemple de type MPLS (pour « Multi Protocol Label Switching ») ou GMPLS (pour « (Generalized) Multi Protocol Label Switching »).

Il est rappelé qu'un réseau de transport à plan de contrôle MPLS est un réseau commutant des étiquettes (ou « labels ») affectés, par exemple, à des paquets IP ou des trames ATM ou Frame Relay, et possédant un plan de contrôle MPLS. Par ailleurs, un réseau à plan de contrôle GMPLS est un réseau commutant des étiquettes (ou « labels ») généralisés associés à des circuits, comme par exemple les réseaux TDM (de type SONET/SDH, PDF, G.709), ou bien associés à des fibres optiques, ou encore associés à des ports d'entrée/sortie, et possédant un plan de contrôle GMPLS. Par la suite, on désigne ces exemples de réseaux à plan de contrôle distribué par l'expression réseau (G)MPLS.

Dans les réseaux précités, les noeuds en charge du routage des paquets de données comportent une base de données d'ingénierie de trafic (ou « Traffic Engineering Database »), des moyens de traitement chargés d'échanger avec d'autres noeuds, selon un protocole de routage choisi (par exemple OSPF), des messages de routage comportant des données d'ingénierie de trafic afin d'alimenter leur base de données d'ingénierie de trafic, et des moyens de signalisation chargés d'échanger avec d'autres noeuds, selon un protocole de signalisation choisi (par exemple RSVP ou RSVP-TE), des messages de signalisation afin de permettre la réservation de ressources de chemins de connexion (ou routes) en fonction des données d'ingénierie de trafic stockées dans leur base de données d'ingénierie de trafic.

On entend ici par « données d'ingénierie de trafic » toutes les données nécessaires à la réservation des ressources pour établir une connexion passant par un chemin entre un noeud source et un noeud de destination, comme par exemple la topologie d'une partie au moins d'un réseau de transport, les états respectifs des liens établis entre les noeuds de cette partie du réseau de transport, et les performances en cours de la partie du réseau de transport (comme par exemple les ressources totales, les ressources utilisées, les délais de transmission, les taux d'erreur, et la jigue observée).

Ces données d'ingénierie de trafic sont également utilisées pour déterminer des chemins de connexion (ou routes), par exemple de type LSP (pour « Label Switched Path » - chemin à commutation d'étiquettes) ou TE-LSP (« Traffic Engineering-LSP » - LSP à ingénierie de trafic), utilisés par les noeuds pour effectuer leurs réservations de ressources. Ces chemins de connexion (ou routes) sont soit calculés localement par les noeuds (c'est-à-dire de façon distribuée), soit calculés par un élément centralisé de réseau. Dans le cas d'un réseau à plan de contrôle GMPLS, les moyens de calcul de chemins de connexion sont distribués dans chacun des noeuds du réseau. D'autres moyens de calcul de chemins de connexion sont en cours de normalisation dans le standard IETF accessible à l'adresse Internet « draft-ietf-pce-architecture-02.txt ». Ces éléments de calcul de chemins de connexion, distribués ou centralisés, sont appelés PCE (pour « Path Computation Elements »).

Dans les réseaux actuels, le calcul des chemins de connexion et la réservation des ressources des chemins de connexion s'effectuent à partir, notamment, de données d'ingénierie en cours, c'est-à-dire représentatives de la topologie en cours du réseau de transport, des états respectifs des liens établis entre les noeuds du réseau de transport, et des performances en cours dudit réseau de transport. Ils ne prennent donc pas en compte les informations prévisionnelles, comme par exemple la future topologie du réseau, l'état de connectivité prévisionnel du réseau et les performances prévisionnelles du réseau, lesquelles permettraient de faciliter le travail des noeuds.

Le document WO 02/056564 décrit un procédé de gestion de ressource dans un système de communication radio utilisant un protocole de signalisation dédié pour transmettre les informations de ressources disponibles entre les noeuds.

L'invention a donc pour but de remédier à l'inconvénient présenté ci-avant.

Elle propose à cet effet un noeud tel que selon la revendication 1.

Le noeud selon l'invention peut comporter d'autres caractéristiques qui peuvent être prises séparément ou en combinaison, et notamment :
- ses moyens de traitement peuvent être chargés d'adjoindre des données temporelles à des données d'ingénierie de trafic prévisionnelles ;
   ➢ ses moyens de traitement peuvent recevoir certaines au moins des données d'ingénierie de trafic prévisionnelles d'un équipement de gestion du réseau de transport ;
   ➢ ses moyens de traitement peuvent recevoir certaines au moins des données d'ingénierie de trafic prévisionnelles dans des messages du protocole de routage ;
   ➢ ses moyens de traitement peuvent recevoir certaines au moins des données d'ingénierie de trafic prévisionnelles d'un équipement de service prévisionnel du réseau de transport ;
- les données temporelles adjointes à des données d'ingénierie de trafic peuvent par exemple comporter des instants de début et de fin de validité ;
- ses moyens de traitement peuvent être chargés d'adjoindre des données temporelles dans un sous-champ d'information des messages de routage ;
- il peut comprendre des moyens de signalisation chargés d'échanger avec d'autres noeuds du réseau des messages de signalisation pour permettre la réservation de ressources de chemins de connexion en fonction des données d'ingénierie de trafic et des éventuelles données temporelles adjointes, stockées dans la base de données d'ingénierie de trafic ;
- les données d'ingénierie de trafic représentatives de performances prévisionnelles peuvent comprendre des informations définies en référence à au moins une classes de trafic prédéterminée, afin d'affiner la gestion de la qualité de service.

L'invention est particulièrement bien adaptée, bien que de façon non exclusive, aux réseaux de transport de type IP/(G)MPLS. Mais, l'invention s'applique d'une manière générale à tout type de réseau de transport comportant un plan de contrôle exploitant un protocole de routage.

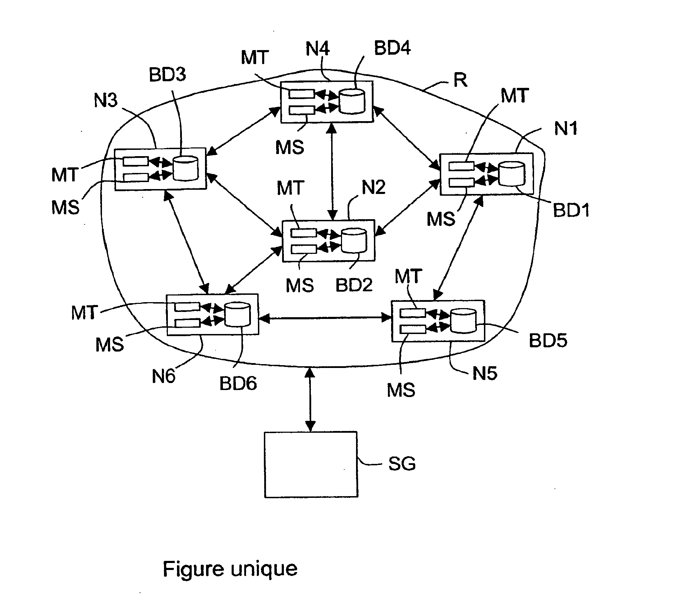

D'autres caractéristiques et avantages de l'invention apparaîtront à l'examen de la description détaillée ci-après, et du dessin annexé, sur lequel l'unique figure illustre de façon très schématique et fonctionnelle une partie d'un réseau de transport comprenant des noeuds selon l'invention. Le dessin annexé pourra non seulement servir à compléter l'invention, mais aussi contribuer à sa définition, le cas échéant.

L'invention a pour objet de faciliter la réservation de ressources et le calcul de chemins de connexion (éventuellement disjoints), au sein d'au moins un réseau de transport à plan de contrôle exploitant un protocole de routage, en vue d'une future utilisation.

Dans ce qui suit, on considère à titre d'exemple non limitatif que le réseau de transport est un réseau de type IP/GMPLS. Mais l'invention n'est pas limitée à ce type de réseau. Elle concerne en effet tous les réseaux à plan de contrôle exploitant un protocole de routage, et notamment les réseaux MPLS ou GMPLS.

Par ailleurs, le réseau étant **ici** de type IP/GMPLS, il utilise un protocole de routage de type OSPF-TE ainsi qu'un protocole de signalisation de type RSVP ou RSVP-TE. Mais l'invention n'est pas limitée à ces types de protocole de routage et de protocole de signalisation. Elle concerne en effet d'autres protocoles de signalisation, comme par exemple LDP et CR-LDP, et tous les protocoles de routage dits « à états de lien », comme par exemple OSPF, OSPF-TE et IS-IS et tous les protocoles de routage dits « à vecteurs de distance », comme par exemple BGP (Border Gateway Protocol) et RIP (Routing Information Protocol).

Un réseau de transport IP/GMPLS R comporte très schématiquement des noeuds Ni connectés les uns autres par des liens physiques, comme par exemple des fibres optiques, et généralement couplés à un équipement de gestion SG, comme par exemple un serveur, faisant partie d'un système de gestion de réseau (ou NMS pour « Network Management System »). Dans l'exemple non limitatif illustré sur l'unique figure, l'indice i des noeuds Ni varie entre 1 et 6 (N1 à N6), mais il peut prendre n'importe quelle valeur supérieure ou égale à deux (2).

Ces noeuds Ni sont par exemple des routeurs périphériques d'entrée/sortie ou des routeurs intermédiaires.

Chaque noeud Ni comprend une base de données d'ingénierie de trafic (ou « Traffic Engineering Database »), ci-après appelée base BDi, dans laquelle sont stockées des données d'ingénierie de trafic, comme par exemple la topologie d'une partie au moins de son réseau (de transport) R, les états respectifs des liens établis entre les noeuds Ni de cette partie de réseau R, les ressources déjà utilisées dans la partie de réseau R, ainsi qu'éventuellement et notamment des estimations de risque. Les bases BDi des noeuds Ni sont alimentées en données et mises à jour au moyen d'un protocole de routage, tel que OSPF-TE (Open Shortest Path First Protocol - Traffic Engineering).

Plus précisément, chaque noeud Ni comporte un module de traitement MT chargé d'échanger avec d'autres noeuds Ni' du réseau R, selon le protocole de routage, des messages de routage comportant des données d'ingénierie de trafic, afin d'alimenter la base associée BDi.

Selon l'invention, le module de traitement MT de chaque noeud Ni est chargé d'adjoindre à certaines au moins des données d'ingénierie de trafic, qu'il place dans certains au moins des messages de routage destinés aux autres noeuds Ni', des données temporelles représentatives de la période pendant laquelle elles sont valables.

Par exemple, les données temporelles qu'il adjoint à des données d'ingénierie de trafic sont des instants de début et de fin de validité.

Par ailleurs, chaque module de traitement MT peut par exemple n'adjoindre des données temporelles qu'à des données d'ingénierie de trafic prévisionnelles. Ces dernières peuvent avoir différentes origines.

Certaines au moins d'entre elles peuvent par exemple être communiquées aux noeuds Ni par un équipement de gestion (par exemple SG) du réseau de transport R.

En variante ou en complément, certaines au moins des données d'ingénierie de trafic prévisionnelles peuvent par exemple être créées par les noeuds Ni et communiquées aux autres noeuds Ni au moyen de messages du protocole de routage (ici, OSPF-TE, mais il pourrait également s'agir de IS-IS-TE).

Dans une autre variante ou en complément, certaines au moins des données d'ingénierie de trafic prévisionnelles peuvent par exemple être communiquées aux noeuds Ni par un équipement de service prévisionnel du réseau de transport R. Cet équipement (non représenté) peut par exemple être un serveur offrant un service de type NWS (pour « Network Weather Service », décrit notamment à l'adresse Internet « http://nws.cs.ucsb.edu/ »). Ce service repose sur un système distribué de capteurs de données instantanées, comme par exemple des performances TCP/IP (bande passante et délai de transmission, notamment), les capacités de calcul (CPU) disponibles, ou des mémoires disponibles. Il consiste à prévoir sur une période donnée les futures conditions de fonctionnement (ou performances) d'un réseau au moyen d'un modèle numérique et des données instantanées délivrées par les capteurs. Les futures performances ainsi déterminées et les ressources du réseau associées sont transmises, par exemple périodiquement.

Par convention, on peut par exemple considérer que des données d'ingénierie de trafic qui ne sont pas associées à des données temporelles sont des données en cours, c'est-à-dire représentatives de l'état en cours des liens du réseau et de sa topologie en cours.

La période de validité d'une donnée d'ingénierie de trafic est fixée par la personne ou l'entité logicielle qui effectue les prévisions. Par ailleurs, les données temporelles qui définissent les périodes de validité sont préférentiellement transmises avec les données d'ingénierie de trafic prévisionnelles.

Chaque module de traitement MT peut par exemple adjoindre les données temporelles dans un sous-champ d'information d'état de lien des messages de routage, dédié à cet effet. Par exemple dans le cas du protocole OSPF-TE, ce sous-champ peut être de type TLV (« Type Length Value » - type de l'information concernée, longueur de l'information concernée (en bits ou octets), et valeur de l'information concernée).

Selon l'invention, chaque module de traitement MT est également chargé de stocker dans la base BDi de son noeud Ni, en correspondance les unes des autres, d'une part, les données temporelles qu'il adjoint (localement) aux données d'ingénierie de trafic et qu'il transmet dans les messages de routage aux autres noeuds Ni', et d'autre part, les données temporelles qui sont adjointes (ou associées) aux données d'ingénierie de trafic contenues dans les messages de routage provenant des autres noeuds Ni'.

On peut envisager que les données d'ingénierie de trafic en cours soient stockées dans une première partie de chaque base BDi, tandis que les données d'ingénierie de trafic prévisionnelles et les données temporelles associées soient stockées dans une seconde partie de chaque base BDi. Mais, cela n'est pas obligatoire, l'important étant de rajouter les données temporelles sous la forme de champs de date de début de validité et de date de fin de validité.

Grâce à l'invention, chaque noeud Ni dispose à la fois des données d'ingénierie de trafic en cours et des données d'ingénierie de trafic valables dans un futur relativement proche. Il peut alors calculer des chemins de connexion (éventuellement disjoints) en vue d'une utilisation immédiate, et des chemins de connexion prévisionnels (éventuellement disjoints) en vue d'une future utilisation s'il est adapté à cet effet (c'est notamment le cas lorsqu'il dispose d'un algorithme de calcul de chemins comprenant les informations prévisionnelles).

Le calcul d'un chemin de connexion prévisionnel se fait à partir au moins de données d'ingénierie de trafic prévisionnelles qui sont représentatives d'une topologie prévisionnelle et d'un état de connectivité prévisionnel d'une partie au moins du réseau de transport R et/ou de performances prévisionnelles d'une partie au moins de ce réseau de transport R.

On entend ici par « performances prévisionnelles » des informations comme par exemple la bande passante maximale des liens entre noeuds Ni, la bande passante disponible pour la réservation sur chaque lien, la bande passante moyenne restante, les délais de transmission, la jigue (ou « jitter ») et les taux d'erreur de transmission de données. Selon un mode de réalisation particulier, les noeuds Ni sont aptes à gérer le trafic en fonction d'une pluralité de classes de service ou classes de priorité prédéfinies. Pour cela, les données d'ingénierie de trafic précitées peuvent définies de manière plus fine, à savoir pour chaque lien et pour chaque classe de trafic devant transiter sur ce lien.

Le calcul des routes ou chemins de connexion prévisionnels est similaire à celui, bien connu de l'homme de l'art, mis en oeuvre pour déterminer une route (ou chemin de connexion) à utilisation immédiate. Il ne sera donc pas re-décrit. On notera cependant qu'il est possible d'utiliser des algorithmes calculant des chemins de connexion plus stables compte tenu des informations temporelles que l'on a sur les liens.

Chaque noeud Ni peut également effectuer des réservations de ressources de chemin de connexion au moyen d'un module de signalisation MS couplé à sa base BDi. Il est rappelé que, lorsqu'un module de signalisation MS doit effectuer une réservation de ressources entre des noeuds source et de destination, il doit préalablement disposer de chemin(s) de connexion (ici, de type LSP-TE). Par conséquent, pour qu'un module de signalisation MS puisse effectuer une réservation de ressources prenant en compte des données d'ingénierie de trafic prévisionnelles, il doit disposer de chemin(s) de connexion prévisionnel(s). Une fois qu'un module de signalisation MS est en possession de chemin(s) de connexion (éventuellement disjoints) entre des noeuds source et de destination, il peut générer à destination des noeuds Ni' qui définissent le(s) chemins(s) de connexion calculé(s), les messages de signalisation adaptés (dans l'exemple de RSVP-TE, il s'agit du message PATH).

Les noeuds Ni selon l'invention, et notamment leurs modules de traitement MT et leurs bases de données BDi, ainsi que leurs éventuels modules de signalisation MS, sont préférentiellement réalisés sous la forme de modules logiciels (ou informatiques). Mais, ils peuvent également être réalisés sous la forme de circuits électroniques ou d'une combinaison de circuits et de logiciels.

L'invention ne se limite pas aux modes de réalisation de noeud décrits ci-avant, seulement à titre d'exemple, mais elle englobe toutes les variantes que pourra envisager l'homme de l'art dans le cadre des revendications ci-après.

## Revendications

1. Noeud (Ni) pour un réseau de transport (R) de type IP/GMPLS comportant un plan de contrôle exploitant un protocole de routage OSPF ou OSPF-TE, comprenant une base de données d'ingénierie de trafic (BDi) et des moyens de traitement (MT) agencés pour recevoir depuis d'autres noeuds (Ni') dudit réseau (R) des messages du protocole de routage comportant des données d'ingénierie de trafic, de manière à alimenter ladite base de données d'ingénierie de trafic (BDi),
lesdits moyens de traitement (MT) étant agencés pour adjoindre des données temporelles à des données d'ingénierie de trafic prévisionnelles représentatives de performances prévisionnelles d'au moins un lien dudit réseau, et pour stocker dans ladite base de données d'ingénierie de traffic (BDi) lesdites données temporelles en correspondance des données d'ingénierie de trafic auxquelles elles ont été adjointes par lesdits moyens de traitement,
**caractérisé en ce que** lesdites performances prévisionnelles incluent au moins une information choisie dans le groupe consistant en la bande passante maximale du lien, la bande passante disponible pour la réservation sur le lien et la bande passante moyenne restante sur le lien, lesdites données temporelles étant représentatives d'une période future pendant laquelle lesdites données d'ingénierie de trafic sont valables,
et **en ce que** les moyens de traitement (MT) sont agencés pour envoyer à d'autres noeuds (Ni') dudit réseau (R) des messages du protocole de routage OSPF ou OSPF-TE contenant lesdites données d'ingénierie de trafic et lesdites données temporelles adjointes,
Le noeud comprenant en outre des moyens de signalisation (MS) agencés pour échanger avec d'autres noeuds (Ni') dudit réseau (R) des messages de signalisation selon un protocole RSVP ou RSVP-TE pour permettre la réservation de ressources de chemins de connexion en fonction desdites données d'ingénierie de trafic et desdites éventuelles données temporelles adjointes, stockées dans ladite base de données d'ingénierie de trafic (BDi)

2. Noeud selon la revendication 1, **caractérisé en ce que** lesdits moyens de traitement (MT) sont agencés pour recevoir depuis un autre noeud dudit réseau (R) un message du protocole de routage contenant des données temporelles et des données d'ingénierie de trafic représentatives de performances prévisionnelles d'au moins un lien dudit réseau, lesdites performances prévisionnelles incluant au moins une information choisie dans le groupe consistant en la bande passante maximale du lien, la bande passante disponible pour la réservation sur le lien et la bande passante moyenne restante sur le lien, lesdites données temporelles étant représentatives d'une période future pendant laquelle lesdites données d'ingénierie de trafic sont valables, et lesdits moyens de traitement (MT) étant agencés pour stocker dans ladite base de données d'ingénierie de trafic (BDi) lesdites données temporelles en correspondance desdites données d'ingénierie de trafic.

3. Noeud selon la revendication 2, **caractérisé en ce que** lesdits moyens de traitement (MT) sont agencés pour recevoir certaines au moins desdites données d'ingénierie de trafic prévisionnelles d'un équipement de gestion (SG) dudit réseau de transport (R).

4. Noeud selon l'une des revendications 2 et 3, **caractérisé en ce que** lesdits moyens de traitement (MT) sont agencés pour recevoir certaines au moins desdites données d'ingénierie de trafic prévisionnelles dans des messages dudit protocole de routage.

5. Noeud selon l'une des revendications 2 à 4, **caractérisé en ce que** lesdits moyens de traitement (MT) sont agencés pour recevoir certaines au moins desdites données d'ingénierie de trafic prévisionnelles d'un équipement de service prévisionnel dudit réseau de transport (R).

6. Noeud selon l'une des revendications 1 à 5, **caractérisé en ce que** lesdites données temporelles adjointes à des données d'ingénierie de trafic comportent des instants de début et de fin de validité.

7. Noeud selon l'une des revendications 1 à 6, **caractérisé en ce que** lesdits moyens de traitement (MT) sont agencés pour adjoindre lesdites données temporelles dans un sous-champ d'information des messages du protocole de routage.

8. Noeud selon l'une des revendications 1 à 7, **caractérisé en ce que** qu'il comprend des moyens de signalisation (MS) agencés pour échanger avec d'autres noeuds (Ni') dudit réseau (R) des messages de signalisation pour permettre la réservation de ressources de chemins de connexion en fonction desdites données d'ingénierie de trafic et desdites éventuelles données temporelles adjointes, stockées dans ladite base de données d'ingénierie de trafic (BDi).

9. Noeud selon l'une des revendications 1 à 8, **caractérisé en ce que** lesdites données d'ingénierie de trafic représentatives de performances prévisionnelles comprennent des informations définies en référence à au moins une classe de trafic prédéterminée.

10. Noeud selon l'une des revendications 1 à 9, **caractérisé en ce qu'**il comprend un contrôleur de routage opérant selon un protocole de routage à états de lien choisi dans un groupe comprenant au moins OSPF, OSPF-TE et IS-IS.

11. Noeud selon l'une des revendications 1 à 9, **caractérisé en ce qu'**il comprend un contrôleur de routage opérant selon un protocole de routage à vecteur de distance choisi dans un groupe comprenant au moins BGP et RIP.

## Patentansprüche

1. Knoten (Ni) für ein Transportnetzwerk (R) vom Typ IP/GMPLS mit einer Steuerebene, welche ein OSPF- oder OSPF-TE-Routing-Protokoll verwendet), umfassend eine verkehrstechnische Datenbank (BDi) und Verarbeitungsmittel (MT), die für den Empfang von Nachrichten des Routing-Protokolls, welche verkehrstechnische Daten enthalten, von anderen Knoten (Ni') des besagten Netzwerks ausgelegt sind, um die besagte verkehrstechnische Datenbank (BDi) zu pflegen,
wobei die besagten Verarbeitungsmittel (MT) dazu ausgelegt sind, den verkehrstechnischen Vorhersagedaten, welche für die voraussichtlichen Leistungen zumindest einer Verbindung des besagten Netzwerks repräsentativ sind, Zeitdaten beizufügen und die besagten Zeitdaten entsprechend den verkehrstechnischen Daten, denen sie von den besagten Verarbeitungsmitteln beigefügt worden sind, in der besagten verkehrstechnischen Datenbank (BDi) zu speichern,
**dadurch gekennzeichnet, dass** die besagten voraussichtlichen Leistungen zumindest eine Information, gewählt in der Gruppe bestehend aus der maximalen Bandbreite der Verbindung, der für die Reservierung auf dieser Verbindung verfügbaren Bandbreite und der auf dieser Verbindung verbleibenden durchschnittlichen Restbandbreite, umfassen, wobei die besagten Zeitdaten für eine zukünftige Periode, während welcher die besagten verkehrstechnischen Daten gültig sind, repräsentativ sind,
und dass die Verarbeitungsmittel (MT) dazu ausgelegt sind, Nachrichten des Routing-Protokolls OSPF oder OSPF-TE, welche die besagten verkehrstechnischen Daten und die besagten beigefügten Zeitdaten enthalten, an andere Knoten (Ni') des besagten Netzwerks (R) zu senden,
wobei der Knoten weiterhin Signalisierungsmittel (MS) umfasst, welche dazu ausgelegt sind, Signalisierungsnachrichten mit anderen Knoten (Ni') des besagten Netzwerks (R) gemäß einem einem RSVP- oder RSVP-TE-Protokoll auszutauschen, um die Reservierung von Verbindungspfadressourcen entsprechend den besagten verkehrstechnischen Daten und den besagten eventuell beigefügten Zeitdaten, welche in der besagten verkehrstechnischen Datenbank (BDi) gespeichert sind, zu ermöglichen.

2. Knoten nach Anspruch 1, **dadurch gekennzeichnet, dass** die besagten Verarbeitungsmittel (MT) dazu ausgelegt sind, von einem anderen Knoten des besagten Netzwerks (R) eine Nachricht des Routing-Protokolls zu empfangen, welche Zeitdaten und verkehrstechnische Daten, die für die voraussichtlichen Leistungen zumindest einer Verbindung des besagten Netzwerks repräsentativ sind, enthält, wobei die besagten voraussichtlichen Leistungen zumindest eine Information, gewählt in der Gruppe bestehend aus der maximalen Bandbreite der Verbindung, der für die Reservierung auf dieser Verbindung verfügbaren Bandbreite und der auf dieser Verbindung verbleibenden durchschnittlichen Restbandbreite, umfassen, wobei die besagten Zeitdaten für eine zukünftige Periode, während welcher die besagten verkehrstechnischen Daten gültig sind, repräsentativ sind, und wobei die besagten Verarbeitungsmittel (MT) dazu ausgelegt sind, die besagten Zeitdaten entsprechend den besagten verkehrstechnischen Daten in der besagten verkehrstechnischen Datenbank (BDi) zu speichern

3. Knoten nach Anspruch 2, **dadurch gekennzeichnet, dass** die besagten Verarbeitungsmittel (MT) dazu ausgelegt sind, zumindest bestimmte der besagten verkehrstechnischen Vorhersagedaten von einer Verwaltungseinrichtung (SG) des besagten Transportnetzwerks (R) zu empfangen.

4. Knoten nach einem der Ansprüche 2 und 3, **dadurch gekennzeichnet, dass** die besagten Verarbeitungsmittel (MT) dazu ausgelegt sind, zumindest bestimmte der besagten verkehrstechnischen Vorhersagedaten in Nachrichten des besagten Routing-Protokolls zu empfangen.

5. Knoten nach einem der Ansprüche 2 bis 4, **dadurch gekennzeichnet, dass** die besagten Verarbeitungsmittel (MT) dazu ausgelegt sind, zumindest bestimmte der besagten verkehrstechnischen Vorhersagedaten von einer Vorhersagediensteinrichtung des besagten Transportnetzwerks (R) zu empfangen.

6. Knoten nach einem der Ansprüche 1 bis 5, **dadurch gekennzeichnet, dass** die besagten den verkehrstechnischen Daten beigefügten Zeitdaten Zeitpunkte des Anfangs und des Endes der Gültigkeit enthalten.

7. Knoten nach einem der Ansprüche 1 bis 6, **dadurch gekennzeichnet, dass** die besagten Verarbeitungsmittel (MT) dazu ausgelegt sind, die besagten Zeitdaten in einem Informations-Teilfeld der Nachrichten des Routing-Protokolls beizufügen.

8. Knoten nach einem der Ansprüche 1 bis 7, **dadurch gekennzeichnet, dass** der Signalisierungsmittel (MS) umfasst, welche dazu ausgelegt sind, Signalisierungsnachrichten mit anderen Knoten (Ni') des besagten Netzwerks (R) auszutauschen, um die Reservierung von Verbindungspfadressourcen entsprechend den besagten verkehrstechnischen Daten und den besagten eventuell beigefügten Zeitdaten, welche in der besagten verkehrstechnischen Datenbank (BDi) gespeichert sind, zu ermöglichen.

9. Knoten nach einem der Ansprüche 1 bis 8, **dadurch gekennzeichnet, dass** die besagten verkehrstechnischen Daten, die für die voraussichtlichen Leistungen repräsentativ sind, in Bezug auf mindestens eine vorbestimmte Verkehrsklasse definierte Informationen umfassen.

10. Knoten nach einem der Ansprüche 1 bis 9, **dadurch gekennzeichnet, dass** er einen Routing-Controller umfasst, welcher gemäß einem Verbindungszustands-Routing-Protokoll, gewählt in einer Gruppe zumindest bestehend aus OSPG, OSPF-TE und IS-IS, betrieben wird.

11. Knoten nach einem der Ansprüche 1 bis 9, **dadurch gekennzeichnet, dass** er einen Routing-Controller umfasst, welcher gemäß einem Distanzvektor-Routing-Protokoll, gewählt in einer Gruppe zumindest bestehend aus BGP und RIP, betrieben wird.

## Claims

1. A node (Ni) for an IP/GMPLS transport network (R) comprising a control plane using an OSPF or OSPF-TE routing protocol, comprising a traffic engineering database (BDi) and processing means (MT) arranged to receive from other nodes (Ni') of said network (R) routing protocol messages comprising traffic engineering data, so as to supply data to said traffic engineering database (BDi),
said processing means (MT) being arranged to add time data to traffic engineering forecast data representative of forecast performance of at least one link of said network, and to store within said traffic engineering database (BDi) said time data as a match for said traffic engineering data to which it had been added by said processing means,
**characterized in that** said forecast performance includes at least one piece of information chosen from the group consisting of the maximum bandwidth of the link, the bandwidth available to be reserved on the link, and the average bandwidth remaining on the link, said time data being representative of a future period during which said traffic engineering data is valid,
and **in that** the processing means (MT) are arranged to send to other nodes (Ni') of said network (R) OSPF or OSPF-TE routing protocol messages containing said traffic engineering data and said added time data,
the node further comprising signalling means (MS) arranged to exchange with other nodes (Ni') of said network (R) signalling messages using a RSVP or RSVP-TE protocol in order to enable the reserving of connection path resources based on said traffic engineering data and said added time data if any, stored in said traffic engineering database (BDi).

2. A node according to claim 1, **characterized in that** said processing means (MT) are arranged to receive from another node of said network (R) a routing protocol message containing time data and traffic engineering data representative of forecast performance of at least one link of said network, said forecast performance including at least one piece of information chosen from the group consisting of the maximum bandwidth of the link, the bandwidth available to be reserved on the link, and the average bandwidth remaining on the link, said time data being representative of a future period during which said traffic engineering data is valid, and said processing means (MT) being arranged to store within said traffic engineering database (BDi) said time data as a match for said traffic engineering data.

3. A node according to claim 2, **characterized in that** said processing means (MT) are arranged to receive at least some of said forecast traffic engineering data from a management equipment (SG) of said transport network (R).

4. A node according to one of the claims 2 and 3, **characterized in that** said processing means (MT) are arranged to receive at least some of said forecast traffic engineering data in messages of said routing protocol.

5. A node according to one of the claims 2 to 4, **characterized in that** said processing means (MT) are arranged to receive at least some of said forecast traffic engineering data from a forecast service equipment of said transport network (R).

6. A node according to one of the claims 1 to 5, **characterized in that** said time data added to traffic engineering data comprises validity start and end times.

7. A node according to one of the claims 1 to 6, **characterized in that** said processing means (MT) are arranged to add said time data to an information subfield of the messages of the routing protocol.

8. A node according to one the claims 1 to 7, **characterized in that** it comprises signalling means (MS) arranged to exchange with nodes (Ni') of said network (R) signalling messages to enable the reserving of connection path resources based on said traffic engineering data and said added time data if any, stored in said traffic engineering database (BDi).

9. A node according to one the claims 1 to 8, **characterized in that** said traffic engineering data representative of forecast performance comprises information defined with reference to at least one predetermined traffic class.

10. A node according to one of the claims 1 to 9, **characterized in that** it comprises a routing controller operating according to a link state routing protocol chosen from a group comprising at least OSPF, OSPF-TE and IS-IS.

11. A node according to one of the claims 1 to 9, **characterized in that** it comprises a routing protocol operating according to a distance vector routing protocol chosen from a group comprising at least BGP and RIP.
